# EUROPEAN PATENT APPLICATION

(11) **EP 2 525 242 A2**
(43) Date of publication of application: **21.11.2012**
(21) Application number: 12168581.2
(22) Date of filing: 18.05.2012
(51) Int. Cl.: G01V 99/00

(54) **Multiscale geologic modeling of a clastic meander belt including asymmetry using multi-point statistics**

(30) Priority: 20.05.2011 US 201161488588 P
(71) Applicant: Baker Hughes Incorporated, Houston, TX 77210 (US)
(72) Inventor: Hoecker, Christian, 2582 KT The Hague (NL)
(74) Representative: Hull, James Edward

(57) **Abstract**

Facies modeling with multi-point statistics (MPS) is used for modeling the outline and internal geometry of a sand belt deposited by high sinuosity, meandering river channels, covering all three different scales relevant to describe the heterogeneity of properties affecting fluid flow in the sand belt. The full complexity of real sediments can be modeled if symmetry and geometric opposition are analyzed and used to condition the modeling processes at each of the scales with auxiliary variables to produce realistic results.

## Description

### BACKGROUND OF THE DISCLOSURE

### 1. Field of the Disclosure

The present disclosure relates to hydrocarbon exploration and development, and more particularly, to the modeling of a distribution of properties of subsurface formations using geo-statistical methods.

### 2. Description of the Related Art

A modeling approach referred to as multi-point statistics (or multiple-point statistics) simulation, or MPS simulation, has been increasingly used in recent years for reservoir property modeling, i.e. for populating cellular subsurface models with properties relevant for oil and gas exploration and development. One such approach is to first model the distribution of categorical values, or facies classes, and then assign physical properties to cells on the basis of facies. MPS simulation uses 2-D or 3-D models of facies distribution as training images, analyzes these images for patterns occurring in them, and uses the identified patterns to populate reservoir models with facies having a realistic distribution. The training images provide conceptual descriptions of the subsurface geological formations. These may be derived on outcrop analysis, well log interpretation, seismic data and general experience (otherwise referred to as "ground truth"). The MPS simulations use the ground truth to determine values for statistical parameters of the training image.

The present disclosure is directed to handling hierarchy in multi-scale modeling of geological facies. Hierarchy may be handled using an analysis of geometric opposition and symmetries in geological analogues and created models. The particular example shown is for patterns of point bars deposition in belts of meandering rivers. This is not to be construed as a limitation and the method disclosed herein may also be used for other depositional environments with various kinds of symmetry and geometric opposition in depositional patterns, including, but not limited to those affected by channelized flow(s) such as delta complexes crevasse splays, and turbidite deposits. Opposed geometries may also occur in shoals, bars, and dunes.

### SUMMARY OF THE DISCLOSURE

One embodiment of the disclosure is a method of developing a hydrocarbon reservoir. The method includes: defining a model of an earth formation in which at least one component of the model has an asymmetry, wherein the model substantially has a form of at least one of: (i) symmetry and (ii) geometric opposition; conditioning the model using a measurement of at least one auxiliary variable to produce a conditioned model; and performing developmental operations based at least in part on an output of the conditioned model.

Another embodiment of the disclosure is a non-transitory computer-readable medium product having instructions thereon that, when read by at least one processor, causes the at least one processor to execute a method, the method comprising: defining a model of an earth formation in which at least one component of the model has an asymmetry, wherein the model substantially has a form of at least one of: (i) symmetry and (ii) geometric opposition; using a measurement of an at least one auxiliary variable and producing a conditioned model; and performing developmental operations based at least in part of an output of the conditioned model.

Another embodiment of the disclosure is a method of developing a hydrocarbon reservoir. The method includes: defining a model of an earth formation comprising a plurality of hierarchical models in which at least one of the plurality of hierarchical models has at least one component having an asymmetry, wherein the model substantially has a form of at least one of: (i) symmetry and (ii) geometric opposition; conditioning a model of at least one level of hierarchy using a measurement of at least one auxiliary variable; using a result of the conditioning for altering a model at at least one other level of the hierarchy to produce a conditioned altered model; and performing developmental operations based at least in part on an output of the conditioned altered model.

Another embodiment of the disclosure is a non-transitory computer-readable medium product having instructions thereon that when read by at least one processor, causes the processor to execute a method, the method comprising: defining a model of an earth formation comprising a plurality of hierarchical models in which at least one of the plurality of hierarchical models has at least one component having an asymmetry, wherein the model substantially has a form of at least one of: (i) symmetry and (ii) geometric opposition; conditioning a model of at least one level of hierarchy using a measurement of at least one auxiliary variable; using a result of the conditioning for altering a model at at least one other level of the hierarchy to produce a conditioned altered model; and performing developmental operations based at least in part on an output of the conditioned altered model.

Another embodiment of the disclosure is a method of developing a hydrocarbon reservoir. The method includes: defining a model of an earth formation comprising a plurality of models having a hierarchy in which a scale of one of the models in the hierarchy is different from a scale of another of the models in the hierarchy; conditioning a model at at least one level of the hierarchy using a measurement of at least one auxiliary variable to produce a conditioned model; and performing developmental operations based at least in part on an output of the conditioned model.

Another embodiment of the disclosure is a non-transitory computer-readable medium product having instructions thereon that when read by at least one processor causes the at least one processor to perform a method, the method comprising defining a model of an earth formation comprising a plurality of models having a hierarchy in which a scale of one of the models in the hierarchy is different from a scale of another of the models in the hierarchy; conditioning a model at at least one level of the hierarchy using a measurement of at least one auxiliary variable to produce a conditioned model; and performing developmental operations based at least in part on an output of the conditioned model.

### BRIEF DESCRIPTION OF THE DRAWINGS

The present disclosure is best understood with reference to the accompanying drawings in which like numerals refer to like elements, and in which:
**FIG. 1** shows an exemplary hierarchical structure of a method of simulation of geological facies using multi-point statistics with auxiliary variables based on higher level modeling results;
**Figs. 2(a) -2(c)** show further detail corresponding to level 1 (the large-scale patterns of meander belts) of **Fig. 1****;**
**Figs. 3(a) -3(c)** show further detail corresponding to level 2 (medium-scale, point bar deposits inside a meander belt) of **Fig. 1****;**
**Figs. 4(a) -4(c)** show further detail corresponding to level 3 (small-scale, lateral accretion pattern inside a point bar unit) of **Fig. 1****;**
**Fig. 5** shows details of the model derived in **Fig. 4 (b)****;** and
**Fig. 6** shows a schematic of an apparatus for implementing one embodiment of the method according to the present disclosure.

### DESCRIPTION OF AN EMBODIMENT

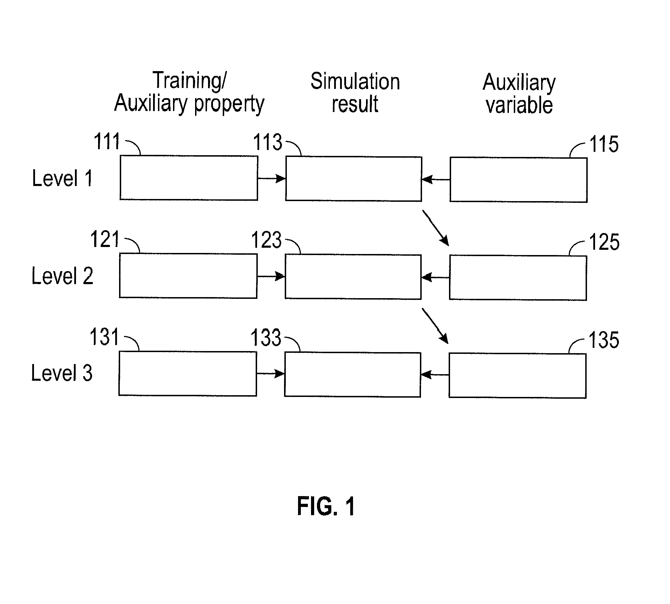

**Fig. 1** illustrates the various components of a hierarchical geological facies modeling process. The levels are indicated: level 1, level 2 and level 3. In the example discussed below, the three levels correspond to a large scale, medium scale and small scale. The number of levels is not to be construed as a limitation, more or fewer levels may be used in some embodiments. The disclosure herein is directed to different methods of development of a hydrocarbon reservoir.

Conceptually, the elements **111, 121** and **131** in the left column of each row may refer to the training process using a facies model (upper) and an accompanying auxiliary variable (lower (base)). The right-hand elements **115, 125** and **135** of each row, may refer to an auxiliary variable that is used to condition simulations. The middle elements of each row, **113, 123** and **133** may refer to simulation results obtained using the training image to the left, conditioned to honor the auxiliary variable to the right. The oblique arrows pointing across scales from **113** to **125** and from **123** to **135** represent a process in which the larger scale modeling result is analyzed for symmetry and/or geometric opposition; the result of this analysis may form the auxiliary variable for the modeling process one scale level down. In addition to including at least one asymmetrical aspect, models may have a form that is substantially symmetrical and/or have geometrical opposition. Definition of symmetries and geometric opposition in the modeling process at various scales may reduce complexity of the modeling and may enable the use of multi-point statistics in generating realistic models of highly complex depositional environments. A specific example of a three-level hierarchical modeling process is discussed next.

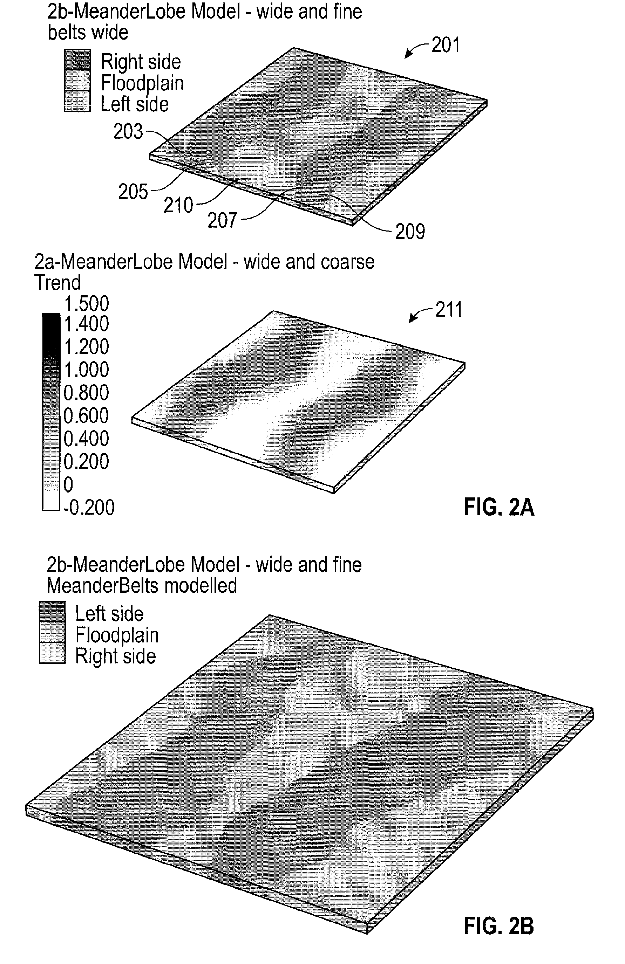

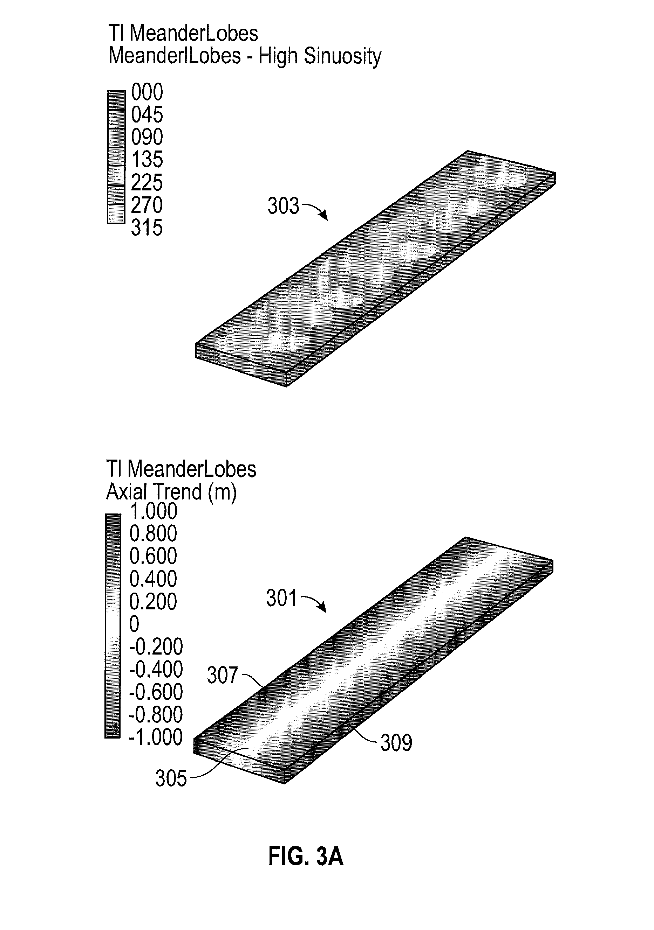

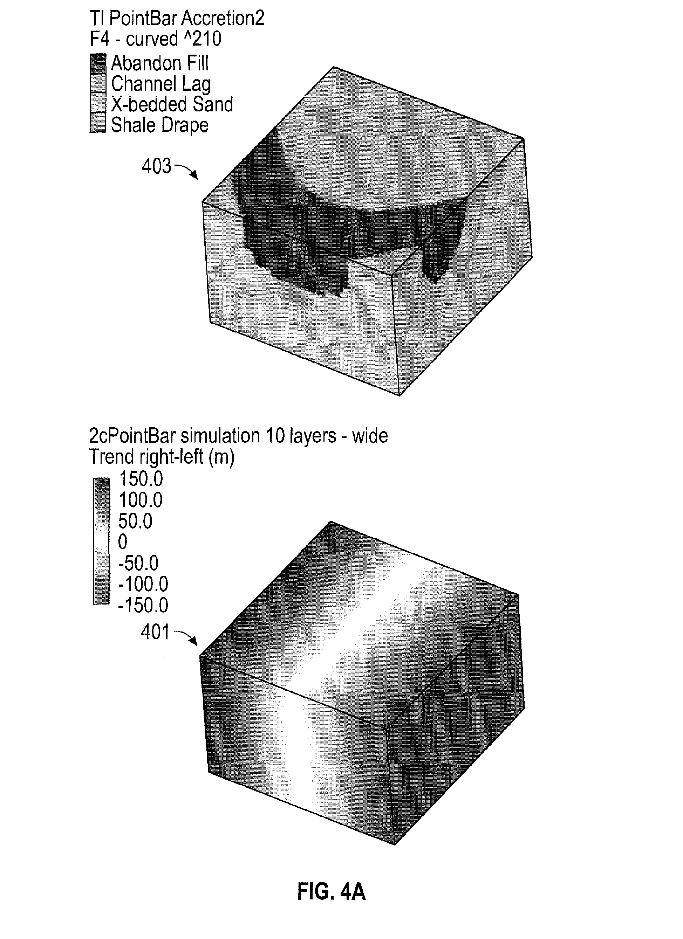

The first level in **Fig. 1** relates to large-scale depositional features. This typically corresponds to a scale of kilometers. In the example considered here, the features of importance may include the presence, orientation, and shape of meander belts and also the division of the belt into two sides with opposite depositional geometries. This is discussed with reference to **Figs. 2(a) - 2(c).** The starting point is the basic concept illustrated in **211** which includes two channels. It should be noted that in **Figs. 2(a) - 2(c),** the model is essentially a two-dimensional model. Increasing complexity is added in the third dimension in **Figs. 3(a) - 3(c)** and **Figs. 4(a) - 4(c).**

As shown in **Fig. 2(a)****,** using ground truth, the overall structure of the belts is separated into the left side **(203, 207)** and the right side **(205, 209).** This division may be used to host smaller scale features that show opposed geometries on either side of the division line (center line). The term "center line" refers to the division even when the center line is off center. The region between the two channels in **210** is the floodplain.

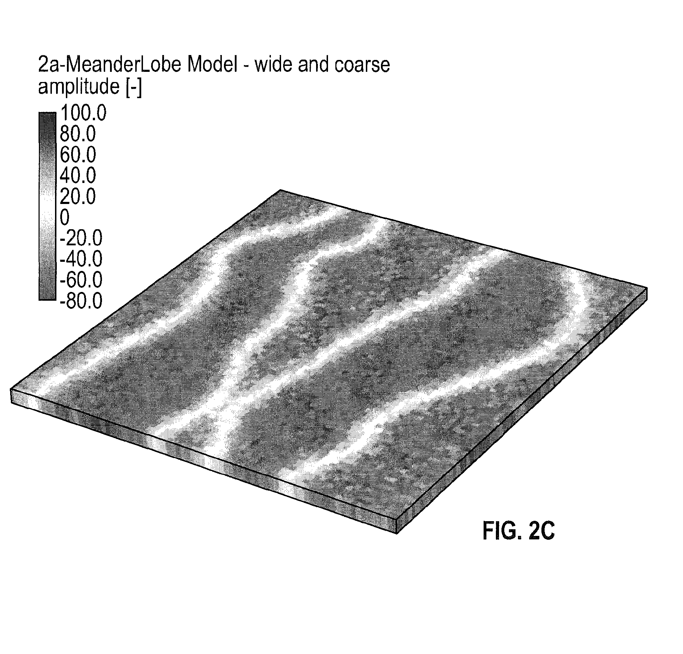

**Fig. 2(c)** shows an image of an auxiliary variable over the area of the model of **Fig. 2 (b)****.** The auxiliary variable may be related to direct geophysical measurements, like seismic data and any of seismic attributes and derivatives (amplitude, velocity, absorption, instantaneous phase, instantaneous frequency), or another geophysical measurement that is indicative of the boundaries of the channels. Such measurements are relatively easy to obtain at the vertical scale of a meander belt. In the absence of measurements, a geologist's notion or assumption captured in a sketch could be used. Note that the boundaries of the channel belts seen in **Fig. 2 (c)** have irregularities that are not present in the belts in **201.** Using the auxiliary variable, the result is the large-scale channel model shown in **Fig. 2 (b)****.**

The second level in **Fig. 1** relates to medium scale modeling. The scale is typically on the order of hundreds of meters and features of importance are point bar deposits preserved after the lateral movement of meandering river channels. Of interest are the azimuths of point bar deposits on either side of the belt axis. This is discussed with reference to **Figs. 3 (a)** **3 (c).**

A starting point, shown by **301** of **Fig. 3 (a)****,** is the azimuth of putative point bars in the model. The azimuth is seen to range from -180° to +180°. The distribution of directions is not random and may show a clear bimodal distribution as point bars will generally point away from the center line of the channel belt. **303** in **Fig. 3 (a)** shows an example of actual ground truth of the azimuths of the point bars. These may be obtained from the analysis of satellite or aerial images, outcrop analysis, core analysis, interpolation between wellbores, or other methods. As the MPS method performs simulation of categorical values, the azimuths of point bars is assigned to classes with discrete steps. In one embodiment of the disclosure, the steps may be 7.5°.

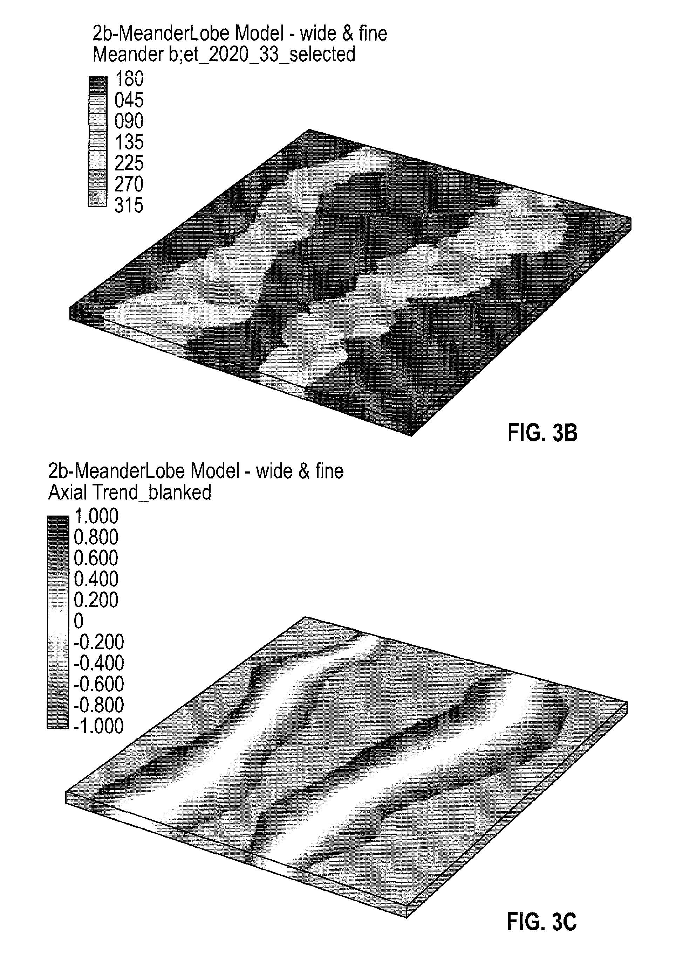

The auxiliary variable of **Fig. 3 (a)** describes the relation that point bars and their azimuths have with respect to the center line **305.** It the present example, distances to the left of the center line **305** are distinguished from distances to the right of the center line using a blue zone **307** and a red zone **309** respectively. **Fig. 3 (c)** shows the product of analyzing the simulation result of **Fig. 2 (b)****,** measuring for each location in each of the belts the normalized distance between belt edge and the simulated center line **305,** distinguishing between distance to the right and the left of the center line **305.** It is clear that **Fig. 3 (c)** includes the results of conditioning by the auxiliary variable measured in **Fig. 2 (c)****.** Herein, "conditioning" refers to matching a model using inferential information, as understood by one of skill in the art, in contrast to force fitting the model to well data. Combining the ground truth of **Fig. 3 (a)** with the conditioning information of **Fig. 3 (c)** gives the model shown in **Fig. 3 (b)****.** By generating a left-right auxiliary variable from larger scale simulation results, smaller scale simulations are conditioned to not only reflect the presence of the belt, with random distribution of point bars inside, but to organize the simulation into point bars pointing into appropriate directions with respect to the belt center line **305.**

**Fig. 3 (c)** is the result of combining **301** with the image produced in the first level, i.e., **Fig. 2 (b)****.** As in **Fig. 2(c)****,** an auxiliary variable may be input. In one embodiment of the disclosure, the method disclosed in US patent 7657375 to Wang, et al., may be used. As disclosed therein, differences in the dip estimated by a shallow reading device (such as a dip meter) and a deep reading device (such as a multicomponent induction tool) can be used to estimate the size of undulations away from the borehole. The MPS simulation can be forced to honor the azimuth of dip in wells by creating a categorical value of point bar azimuth from the dipmeter data and using it as hard well data in the simulation. (MPS may insert "hard data" as prior information into the model and simulates neighbor cells in the model treating these cells as already modeled.)

The current training image of point bar azimuths in **Fig. 3 (a)** shows a bimodal azimuth distribution with peaks at +90° and -90° with respect to the belt axis. For lower sinuosity channels, the peak angles are biased towards the downstream direction. This can be easily implemented by changing values; and results may be improved if the shape of preserved point bars is adjusted. This means that the disclosure can be applied to a wide range of depositional environments with channelized flow. The same principle also holds for shoals and bars showing a differentiation into foresets on seaward and landward sides; and similarly with a number of dune types.

It should also be noted that dipmeter data may be used not only at the medium-scale but also at the large-scale. Depending on the dips observed, a well log with classes "channel belt left", "channel belt right" and "floodplain/overbank" may be created, thereby forcing the division of the belt to honor well data. This is an example of the same auxiliary variable being usable at two different levels.

The third level in **Fig. 1** relates to small-scale modeling. Included therein may be the effects of lateral accretion and abandonment fills marking the end of the life cycle of point bars. The model may include heterogeneity associated with channel lags, shale drapes and mudstone plugs. This is discussed with reference to **Figs. 4 (a)**-**4(c).**

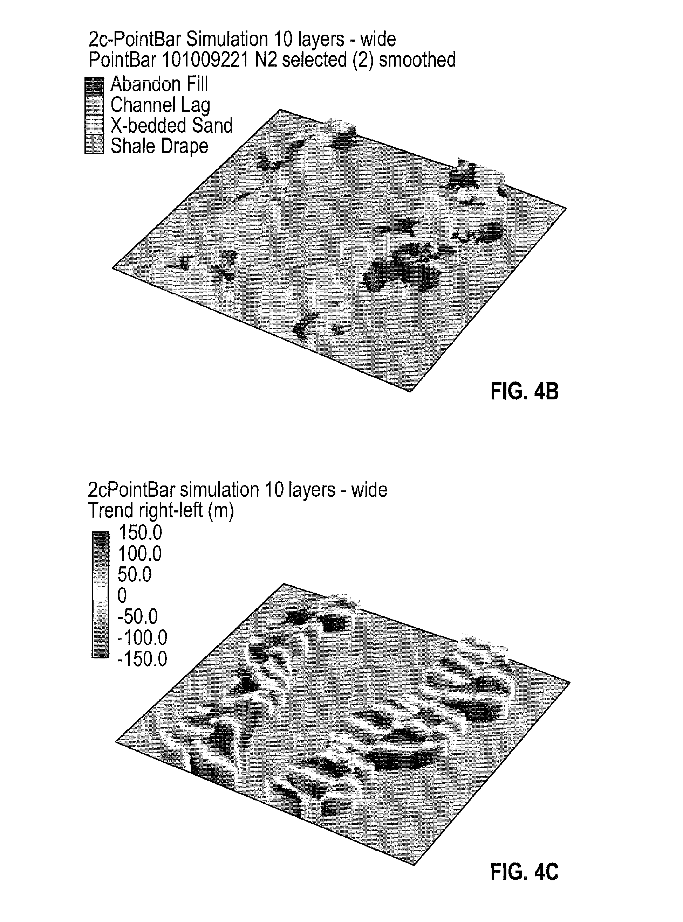

A starting point, shown by **401** of **Fig. 4 (a)****,** is the azimuth of lateral accretion sets within putative point bars in the model. The azimuth of dipping layers is seen to range from - 90 ° to + 90 ° with respect to the point bar azimuth. This follows from the fact that, in the absence of any other information, the azimuth of local dip on the right side of the point bar will be opposite to that of the local dip on the left side of the point bar while the azimuth of dipping beds in the middle of the point bar will be close to zero, i.e. will be identical with the azimuth of the point bar. **403** in **Fig. 4 (a)** shows an example of actual ground truth of the local dips. These may be obtained from outcrop analysis, core analysis and dip meter readings. **Fig. 4 (c)** shows the product of analyzing the simulation result of **Fig. 3 (b)****,** measuring for each location in each of the point bars the normalized distance between point bar edge and the simulated center line, distinguishing between distance to the right and the left of the center line. It is clear that **Fig. 4 (c)** includes the results of condition by the auxiliary variable measured in **Fig. 3 (c)****.** Combining this ground truth with the model of **Fig. 4 (c)** gives the model shown in **Fig. 4 (b)****.**

**Fig. 4 (c)** is the result of combining **401** with the model produced in the second level, i.e., **Fig. 3 (b)****.** In analogy to translating the information of **Fig. 2 (b)** into **Fig. 3 (c)****,** the content of **Fig. 3 (b)** is translated into a left-right property inside each point bar unit, in this case left and right with respect to a constructed center line that is oriented parallel to the azimuth of the simulated point bar. In this fashion a variable equivalent to the left-right auxiliary variable of the training image in **Fig 4 (a)** is generated. In one embodiment of the disclosure, the method disclosed in US patent 7317991 to Wang et al. may be used. As disclosed therein, multicomponent measurements made in a cross-bedded earth formation are processed to give one or more equivalent models having transverse isotropy (TI). Resistivity information about the cross-bedding is obtained from one of the TI models and a measured cross-bedding angle. Resistivity information about the cross-bedding may also be obtained using a combination of two or more of the equivalent TI models.

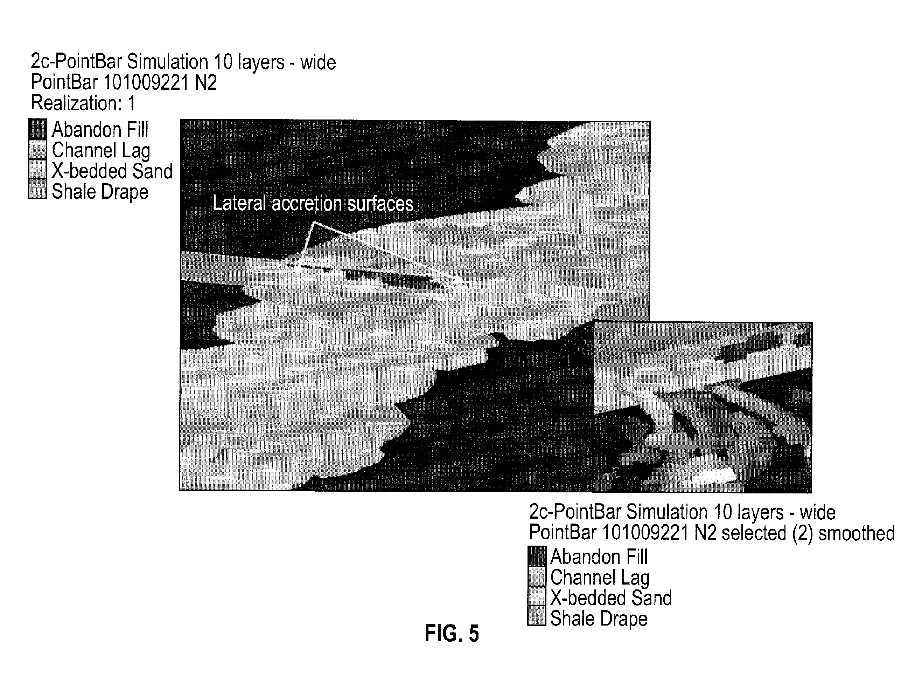

**Fig. 5** shows details of the model in **Fig. 4 (b)****.** The main view shows a horizontal slice showing facies and, as overlay, also the point bar lobes model at level 2 plus a vertical section with facies only. In the insert, a 3D rendered voxel configuration for the channel lag facies is shown. Despite the fact that the output is a model, it is a model based on ground truth. This makes it possible to develop a variety of models subject to the same constraints and perform reservoir simulation using the variety of models. The results of such simulation can provide an important guidance in developing recovery methods in the real world. In particular, quantities like sweep efficiency can be estimated for a plurality of models. Such modeling is helpful in evaluating different patterns for using in secondary recovery operations. In addition, based on the facies map, reservoir permeability may be estimated for a plurality of models. In a statistical sense, this is valuable in estimating the amount of recoverable hydrocarbons in-place. Collectively, such operations may be referred to as performing further developmental operations.

It should be noted that the discussion above has been with respect to a single depositional unit. The method disclosed herein can also be used within larger scale depositional units showing vertical trends in facies proportions and patterns. This is accomplished by defining a second auxiliary variable called 'up-down' or 'top-bottom', steering the selection of patterns vertically within a larger depositional unit.

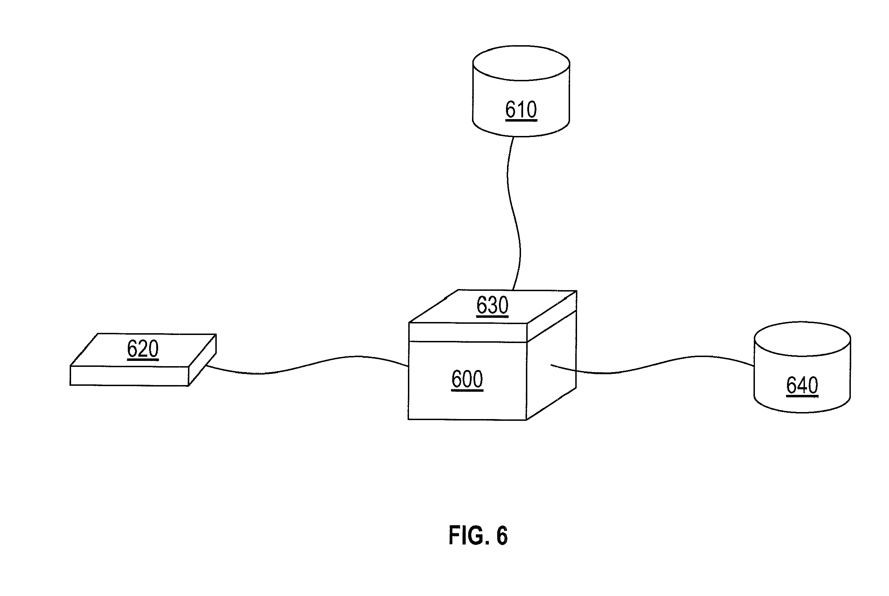

As shown in **Fig. 6****,** certain embodiments of the present disclosure may be implemented with a hardware environment that includes an information processor **600,** a information storage medium **610,** an input device **620,** processor memory **630,** and may include peripheral information storage medium **640.** The hardware environment may be in the well, at the rig, or at a remote location. Moreover, the several components of the hardware environment may be distributed among those locations. The input device **620** may be any information reader or user input device, such as data card reader, keyboard, USB port, etc. The information storage medium **610** stores information provided by the detectors. Information storage medium **610** may be any standard non-transitory computer information storage device, such as a ROM, USB drive, memory stick, hard disk, removable RAM, EPROMs, EAROMs, EEPROM, flash memories, and optical disks or other commonly used memory storage system known to one of ordinary skill in the art including Internet based storage. Information storage medium **610** stores a program that when executed causes information processor **600** to execute the disclosed method. Information storage medium **610** may also store the formation information provided by the user, or the formation information may be stored in a peripheral information storage medium **640,** which may be any standard computer information storage device, such as a USB drive, memory stick, hard disk, removable RAM, or other commonly used memory storage system known to one of ordinary skill in the art including Internet based storage. Information processor **600** may be any form of computer or mathematical processing hardware, including Internet based hardware. When the program is loaded from information storage medium **610** into processor memory **630** (e.g. computer RAM), the program, when executed, causes information processor **600** to retrieve detector information from either information storage medium **610** or peripheral information storage medium **640** and process the information to estimate at least one parameter of interest. Information processor **600** may be located on the surface or downhole.

While the foregoing disclosure is directed to the one mode embodiments of the disclosure, various modifications will be apparent to those skilled in the art. It is intended that all variations be embraced by the foregoing disclosure.

## Claims

1. A method of developing a hydrocarbon reservoir, the method comprising:
defining a model of an earth formation in which at least one component of the model has an asymmetry, wherein the model substantially has a form of at least one of: (i) symmetry and (ii) geometric opposition;
conditioning the model using a measurement of at least one auxiliary variable to produce a conditioned model; and
performing developmental operations based at least in part on an output of the conditioned model.

2. The method of claim 1, wherein the at least one auxiliary variable comprises at least one of: (i) seismic wave amplitude, (ii) seismic wave velocity, (iii) seismic wave absorption, (iv) seismic wave instantaneous phase, (v) seismic wave instantaneous frequency, (vi) a measurement indicative of the boundaries of a plurality of channels, and (vii) a difference between dip angle measurements of a shallow reading device and a deep reading device.

3. The method of claim 1 or 2, wherein the model includes a heterogeneity associated with at least one of: (i) a channel lag, (ii) a shale drape, and (iii) a mudstone plug.

4. The method of any of claims 1 to 3, wherein defining the model includes using ground truth, and optionally the ground truth is obtained using at least one of:
(i) satellite images, (ii) aerial images, (iii) outcrop analysis, (iv) core analysis, and (v) interpolation between wellbores.

5. The method of any preceding claim, wherein the developmental operations includes at least one of: (i) estimating sweep efficiency, (ii) evaluating patterns for secondary recovery, (iii) estimating reservoir permeability, and (iv) estimating an amount of recoverable hydrocarbons.

6. A method of developing a hydrocarbon reservoir, the method comprising:
defining a model of an earth formation comprising a plurality of hierarchical models in which at least one of the plurality of hierarchical models has at least one component having an asymmetry, wherein the model substantially has a form of at least one of: (i) symmetry and (ii) geometric opposition;
conditioning a model of at least one level of hierarchy using a measurement of at least one auxiliary variable;
using a result of the conditioning for altering a model at at least one other level of the hierarchy to produce a conditioned altered model; and
performing developmental operations based at least in part on an output of the conditioned altered model.

7. The method of claim 6, wherein the at least one auxiliary variable comprises at least one of: (i) seismic wave amplitude, (ii) seismic wave velocity, (iii) seismic wave absorption, (iv) seismic wave instantaneous phase, (v) seismic wave instantaneous frequency, (vi) a measurement indicative of the boundaries of a plurality of channels, and (vii) a difference between dip angle measurements of a shallow reading device and a deep reading device.

8. The method of claim 6 or 7, wherein the model includes a heterogeneity associated with at least one of: (i) a channel lag, (ii) a shale drape, and (iii) a mudstone plug.

9. The method of any of claims 6 to 8, wherein defining the model includes using ground truth, and optionally wherein the ground truth is obtained using at least one of: (i) satellite images, (ii) aerial images, (iii) outcrop analysis, (iv) core analysis, and (v) interpolation between wellbores.

10. A method of developing a hydrocarbon reservoir, the method comprising:
defining a model of an earth formation comprising a plurality of models having a hierarchy in which a scale of one of the models in the hierarchy is different from a scale of another of the models in the hierarchy;
conditioning a model at at least one level of the hierarchy using a measurement of at least one auxiliary variable to produce a conditioned model; and
performing developmental operations based at least in part on an output of the conditioned model.

11. The method of claim 10, wherein the at least one auxiliary variable comprises at least one of: (i) seismic wave amplitude, (ii) seismic wave velocity, (iii) seismic wave absorption, (iv) seismic wave instantaneous phase, (v) seismic wave instantaneous frequency, (vi) a measurement indicative of the boundaries of a plurality of channels, and (vii) a difference between dip angle measurements of a shallow reading device and a deep reading device.

12. The method of claim 10 or 11, wherein the model includes a heterogeneity associated with at least one of: (i) a channel lag, (ii) a shale drape, and (iii) a mudstone plug.

13. The method of any of claims 10 to 12, wherein defining the model includes using ground truth, and optionally the ground truth is obtained using at least one of:
(i) satellite images, (ii) aerial images, (iii) outcrop analysis, (iv) core analysis, and (v) interpolation between wellbores.

14. The method of any of claims 6 to 13, wherein the developmental operations includes at least one of: (i) estimating sweep efficiency, (ii) evaluating patterns for secondary recovery, (iii) estimating reservoir permeability, and (iv) estimating an amount of recoverable hydrocarbons.

15. A non-transitory computer-readable medium product having stored thereon instructions that, when executed by at least one processor, perform a method, the method comprising:
defining a model of an earth formation in which at least one component of the model has an asymmetry, wherein the model substantially has a form of at least one of: (i) symmetry and (ii) geometric opposition;
conditioning the model using a measurement of at least one auxiliary variable to produce a conditioned model; and
performing developmental operations based at least in part on an output of the conditioned model.
